# EUROPEAN PATENT APPLICATION

(11) **EP 0 628 923 A2**
(43) Date of publication of application: **14.12.1994**
(21) Application number: 94109093.8
(22) Date of filing: 14.06.1994
(51) Int. Cl.: G06F 15/70

(54) **Automatic inspection system**

(30) Priority: 14.06.1993 IL 10600793
(71) Applicant: GALAI LABORATORIES LTD., 10500 Migdal Haemek (IL)
(72) Inventor: Moran, Maty, Yokneam 20600 (IL); Luria, Marc, Hoshaia 17915 (IL); Adin, Einat, Haifa 32544 (IL); Karasikov, Nir, Haifa 34980 (IL); Yaffe, Dan, Haifa 34980 (IL)
(74) Representative: Weisert, Annekäte, Dipl.-Ing. Dr.-Ing.

(57) **Abstract**

A system and method for the classification of defects on electronic chips and the like. The effect image is extracted by image comparison techniques, visual features are computed and the best classification of the defect image is determined in a fuzzy logic based expert system. The system for carrying out such method comprises means for forming a "golden image" and a defect image, for obtaining a difference image of these and feature extraction, and means for the evaluation of the defects based on these.

## Description

### FIELD OF THE INVENTION:

The invention relates to a system and method for automatic defect classification on silicon wafers and similar products. It is especially suited for the automatic inspection and defect classification during the production of silicon wafer microelectronic chips (printed circuits), with a wide variety of chip patterns and also with a plurality of layers. The novel system operates in an essentially automatic manner, it has a high degree of accuracy and is able to effect inspections at a high speed. Due to the simplicity of operation of the system, it can be operated with ease and technicians can easily be taught how to correctly operate the system.

Fab engineers can define defect categories without knowledge of Image processing using Defect Description Lanugage.

The system of the invention is preferably interfaced with a commercially available review station.

### BACKGROUND OF THE INVENTION:

Inspection of wafers in order to determine the occurance of defects, and to classify these is of utmost importance in the production process of these.

Semiconductor wafers are produced by complicated multi-step processes. Technologies in the submicron range are very delicate, and there is always a chance of error or malfunction at each of the many stages. These costly errors should be ascertained as soon as possible. On-line inspection and quality control measures are imperative stages of the production process.

There exists a real need for high speed, high volume, product capable of efficient automatic inspection and classification.

There have been used various inspection techniques, but due to the rather large number of defects and the monotonous nature of this work, visual inspection causes fatigue and eye-strain and there are apt to occur mistakes after a certain period of time.

There were introduced automatic inspection systems which analyze the inspected wafer and determine defect location in an automatic manner. The task of the operator with such systems is to classify the defects, to determine their severity, whether a wafer can be used or must be discarded, and if possible - to ascertain the source of the defects in the production line.

In practice there were encountered up to about 4,000 defects in a single 8" wafer and this makes the inspection and classification very monotonuous and time consuming.

Hitherto there have not been commercialized any automatic defect classification systems, which carry out automatically all the steps of the classification, including location of defects, classification of the defects in an accurate manner. Such systems also claify in an entirely automatic manner whether wafers can be used or not. We are not aware of automatic defect classification system for wafers.

### SUMMARY OF THE INVENTION:

There is provided a system for the determination of the existence of defects in silicon wafers and similar products, and for their classification. The system operates in an automatic manner and is easily operated. The system determines the exact location of all defects and furthermore classifies these according to predetermined parameters. The automatic classification of defects during inspection increases the inspection speed. Defect catagories are established for such a system by an application expert (FAB engineer) and these are applied in the novel Automatic Defect Classification System (ADCS) of the present invention.

Inspection speed, accuracy and defect classification are determined in an essentially automatic manner, and thus devoid of human mistakes which may be due to fatigue or other causes. A large number of wafers can be inspected within a certain period of time and defects are located and classified.

According to a preferred embodiment of the invention, the system of the invention is interfaced with a commercially available review station which provides an image of the defects to a field of view.

The video image from such a review station is acquired by a frame grabber, and according to a preferred embodiment a video processing accelerator based on a T-9000 transputer processor which performs defect detection, location determination and defect classification. There are provided defect classification and detection algorithms which combine advanced image processing techniques and expert system technology in a parallel computing environment.

According to the present invention, the novel system is able to classify defects on wafers coming from the production process by means of a three step process:
a. The defect image is extracted using image comparison techniques;
b. A wide range of visual features, both spatial and textural is computed from the defect image, using advanced image processing algorithms;
c. The best classification for the defect image is determined, using these features in a fuzzy logic based expert system.

Defect categories can be defined by the application expert, using Defect Description Language (DDL), which is composed of Visual Predicates, which are familiar terms which describe the visual characteristics of the defect. For example: scattered, circular and elongated are all visual predicates which can be used in defining a specific defect. Expert system rules are defined by the use of a combination of visual predicates. Furthermore, the expert is able to define the severity of the defects by a rule based on linguistic hedges, such as "very", "somewhat" and "not". After establishment of agreed criteria, the expert knowledge can be distributed to all review stations of a given facility, resulting in uniformity of defect determination and classification. Automatic defect determination and classification can thus be effected without revealing any production line parameters or details, which is of importance in view of the competitive nature of production processes and trade secrets.

According to the present invention there exists various visual predicates which can be efficiently computed in parallel, from the picture features using suitable transputer hardware. The system is capable of classifying defects on such electronic chips which vary in shape, size and which depend on the die pattern.

The main process steps of the classification process are as follows:
The "golden image" and the defect image are registered within sub-pixel accuracy using a spatial correlation algorithm.

Feature extraction is as follows:
a. Features of both the difference image and the defect image are extracted;
b. Objects are detected in both pictures using a segmentation algorithm;
c. Geometrical and grey level features are extracted from the objects found in the segmentation algorithm.
d. Only those features which are necessary for a predetermined chip-level are evaluated.
e. Fuzzification: the fuzzy predicates are computed using the features extracted from the images, and these predicates are assigned values between 0 and 1, where 1 designates total belief in the given predicate.

Rule Application: Linguistic hedges are used to modify the values of these predicates, and rules are evaluated by combining the values of the fuzzy predicates by using fuzzy combination algorithms;

The rule output of the system is used to make the ultimate classification decision.

The system takes control of the review station without human operator intervention. The dialogue between the review station and the system includes many operations some of which are:-
1. Movement of the X,Y axis of the stage.
2. Focus
3. Change of the objectives.
4. Light control.
5. Method of Imaging
6. Getting wafer and Lot information
7. Getting the defect map
8. Send back the classification

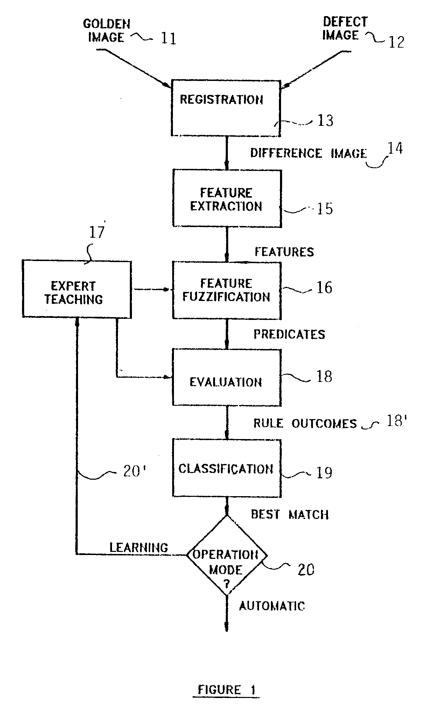

The video image from the CCD camera is the data which the system uses for classification. The classification data can be transferred to the main computer in the facility via RS-232 or etheret communication bus. See Fig. 1.

The system of the invention is illustrated with reference to the enclosed Figures, in which:
- Fig. 1: is a block diagram of a classification system,
- Fig. 2: is a another block diagram illustrating the interaction of the main components of the system;
- Fig. 3: is another block diagram of a system of the invention.

As shown in the schematical block diagram of Fig. 1, a system of the invention comprises in combination Golden Image forming means 11, defect image forming means 12, registration means 13 having as input the output of 11 and 12, said registration means 13 being connected with difference image forming means 14, leading to feature extraction means 15, connected to feature fuzzification means 16, which receives as input also expert teaching data, 17 and which utilizes predicates to provide an input to "Rules" 18 evaluation means, connected also with expert teaching means 17, which "Rules Evaluation" 18 is connected with classification means 19, which has a input rule outcome data 18'and which is connected to operation mode 20 which in learning mode 20' returns back to the Expert teaching 17 as a feedback and in Automatic mode the data is stored in the data base.

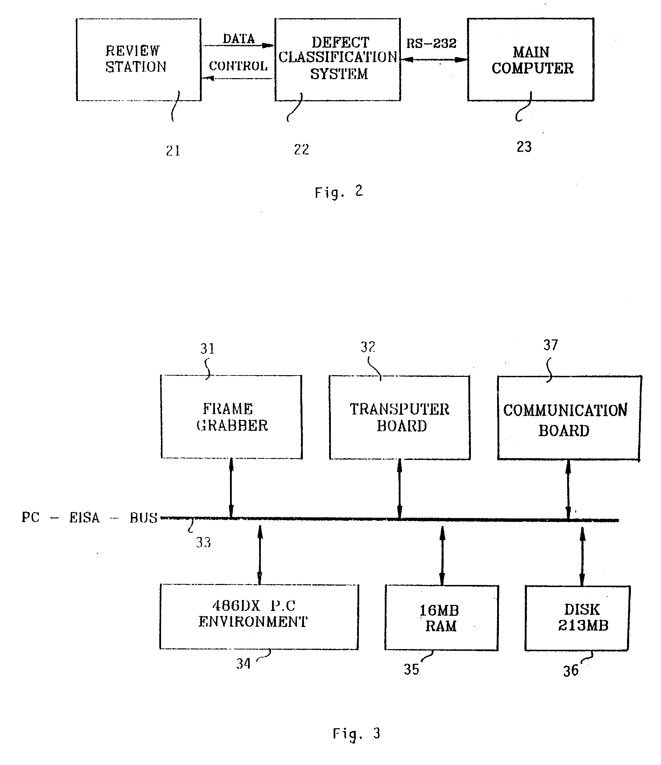

In Fig. 2, review station 21 is connected with the automatic defect classification system 22, which controls said review station 21, and which review station 21 outputs data as video image of the defect of the microelectronic chip to system 22 which is connected with the main computer 23 of the Fab.

The defect classification is transmitted to the main computer via communication Board 37.

The system configuration illustrated with reference to Fig. 3 is as follows:
The system configuration is shown if Fig. 3. The video image captured by the frame grabber 31 from the CCD on the review station is stored in the frame grabber memory. This picture data is transferred to the T-9000 transputer accelerator board 32 via the PC-Eisa bus 33. The T-9000 board performs the heavy duty image processing algorithms in a parallel process. Both the frame grabber 31 and the T-9000 board 32 are controlled by the 486 Personal Computer 34. The detection and classification algorithms combine advanced image processing techniques and expert system technology in parallel computing environment. The personal computer uses the 16 Mega Byte Random Access Memory (RAM) 35 and the disk 36 for the above mentioned tasks.

## Claims

1. A method for the automatic defect classification of defects on microelectronic chips, such as printed circuits and masks, which comprises: classifying the defects by:
a. extracting the defect image using image comparison techniques,
b. computing a wide range of visual features, both spatial and textural from the defect image using advances image processing algorithms,
c. using these features in a fuzzy logic based expert system to determine the best classification for the defect image.

2. A process according to claim 1, where defect categories are defined by the use of defect description language, by the user to teach the system.

3. A process according to claim 1 or 2, which comprises extracting the defect image and computing the difference image, detecting defect objects using a segmentation algorithm, and extracting geometrical and grey level features from the objects found by means of the segmentation algorithm.

4. A process according to any of claims 1 to 3, where fuzzy predicates are computed using features extracted from the pictures, assigning them numerical values on a given scale, which are used for the ultimate classification.

5. A process according to claim 4, where linguistic hedges are used to modify the values of the predicates, and where rules are evaluated by combining the values of the fuzzy predicates using fuzzy combination algorithms.

6. A process according to any of claims 1 to 5 where the computation is by means of a parallel processor-transputer.

7. A system for the automatic classification of defects on microelectronic chips which comprises in combination means for forming a "golden image", means for forming a defect image, means for registration both of these, means for obtaining a difference image of these, means for feature extraction from these, means for fuzzification of such features, means for establishing and applying predicates for the various characteristics of such images, expert teaching means providing an input to the feature fuzzification stage, means using certain predetermined rules for the classification of the defects and means for providing automatic information on such defects, including information on their severity and any other desired parameters.

8. A system according to claim 7, connected to a conventional review station adapted to move a specific defect into the field of view, based on a map of defects of the wafer being examined, which is provided to such station, where the control of the review station is via a communication line, where the required image information is acquired by means of a CCD camera connected to a microscope of the review station.

9. A system according to claim 8, where the classification and other pertinent data are transferred via a Fab communication bus to Fab central control.
